# EUROPEAN PATENT APPLICATION

(11) **EP 1 550 702 A1**
(43) Date of publication of application: **06.07.2005**
(21) Application number: 02765608.1
(22) Date of filing: 20.09.2002
(51) Int. Cl.: C09B 43/16, B41M 5/00, B41J 2/01, C09D 11/00

(54) **DYE COMPOSITION, INK COMPOSITION, AND METHOD OF INK-JET RECORDING**

(71) Applicant: Nippon Kayaku Kabushiki Kaisha, Tokyo 102-8172 (JP)
(72) Inventor: KITAYAMA, Hirokazu, NIPPON KAYAKU KK, Kita-ku, Tokyo 115-8588 (JP); SHIRASAKI, Yasuo, Saitama-shi, Saitama 330-0826 (JP)
(74) Representative: Gille Hrabal Struck Neidlein Prop Roos
(86) International application number: PCT/JP2002/009671
(87) International publication number: WO 2004/026964

(57) **Abstract**

The present invention relates a yellow dye composition, liquid dye composition, and ink composition which each contains compounds represented by the formulae 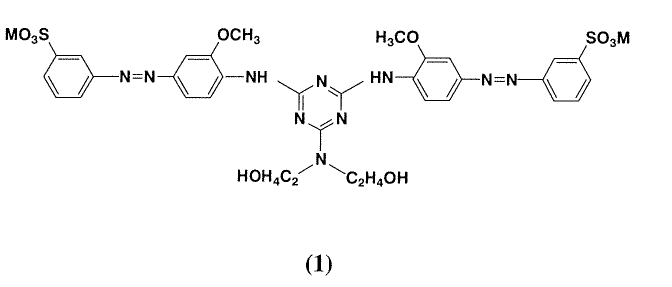 (1) and (2):
Wherein, M and L each represents hydrogen, an alkali metal, alkaline earth metal, cation of an organic amine, or ammonium ion. They have satisfactory long-term storage stability in an aqueous solution having a dyestuff concentration as high as 6 to 10%. They have a hue and vividness which are suitable 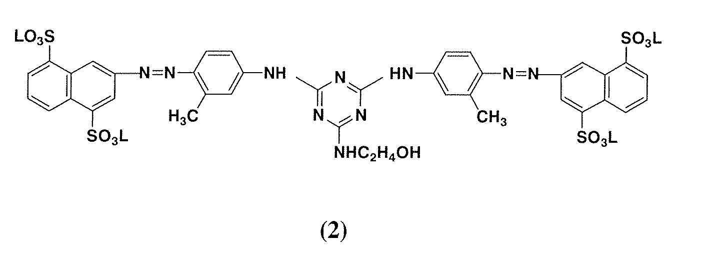 for ink- jet recording, and are **characterized by** giving prints high in fastness regarding light fastness, etc.

## Description

### TECHNICAL FIELD

The present invention relates to a dye composition, an ink composition, and a method of ink-jet recording.

### BACKGROUND ART

Diverse ink jetting processes have been developed for the recording method by means of ink-jet printer, and the process respectively comprises generating ink droplets to deposit onto various recording materials (such as paper, film, cloth) for recording. The recording method by means of ink-jet printer is characterized in that it creates no noise and can print onto unlimited areas including uneven surfaces, soft materials, fragile products, etc. due to the mechanism in which a recording head does not contact with the recording material. Such a method, being characterized by readily providing a compact, high-speed and color printer, has rapidly been spread in recent years and further propagation may be expected in the future. In order to record in color an image information or a character information displayed on a computer color monitor by means of an ink-jet printer, the information is generally printed according to subtractive color mixing of inks of four colors, namely those are yellow(Y), magenta(M), cyan(C) and black(K). In order to reproduce an printed image created by additive color mixing of red (R), green (G), blue (B) on a CRT display as faithfully as possible according to subtractive color mixing, the dyestuffs to use, especially those for YMC inks, are desired to have vividness, and color hues close to the standards of YMC respectively. Additionally, it is required that the resulting ink composition is stable for long-term storage, and the printed image has high optical density and excellent fastness including water fastness and light fastness.

The use of Ink- jet printers has diversely been propagated from compact ones for OA to large ones for industrial use. Therefore, more fastnesses including water fastness and light fastness are desired. The water fastness has substantially been being improved by coating inorganic or organic micro particles such as cationic polymer, porous silica, alumina sol or special ceramics which can absorb dyestuffs in ink, on a paper sheet together with PVA resin. Various coated sheets for ink-jet printing are already available in market.

The chemical structure of yellow dyestuff used in a water-soluble ink for ink-jet recording is typically the azo type. Some of azo type dyes currently used have good hue and water fastness. However, light fastness thereof is generally inferior. Particularly it is inferior in level compared with the cyan dyes represented by the copper phthalocyanine type. Furthermore, a yellow dye has not yet been obtained that satisfies all the properties such as hue, vividness, light fastness, water fastness, humidity fastness and stability in solubility.

The dyes used for preparing ink for ink-jet recording are provided in aqueous solution at relatively high concentration of 10% by mass, more or less, so that the ink is prepared easily. Therefore, the long-term storage stability in aqueous solution of the dyes of such a high concentration has come to be important.

The compound used in the present invention represented by the formula (1), of which producing method being disclosed in Japanese patent publication No.11708/1980, has been known as a yellow dye suitable for dyeing paper and pulp and excellent in light fastness, however, it is not known as a dye for ink jet recording. Through the investigation by the inventors, even the dye with reduced content of inorganic salt is not fully satisfactory in fastnesses to such as light and water when used for ink-jet recording. Moreover, there is a problem that the dye at high concentration lacks long term storage stability in aqueous solution. On the other hand, it is disclosed in Japanese patent publication No. 6193/1991 that the compound of the formula (2) known as C.I. Direct Yellow 86 is suitable for ink jet recording with the content of the sodium salt being increased and the inorganic salt being reduced. The dye thereof is excellent in vividness and fastness but there are large problems such that its hue is tinged with red, widely apart from that of JNC standard yellow, and its stability is extremely poor in aqueous solution at high concentration.

Accordingly, the present invention is intended to provide a yellow dye, being excellent in long-term storage stability in aqueous solution at high concentration, having hue and vividness suitable for ink-jet recording, and providing the recorded matter of high fastness.

### DISCLOSURE OF THE INVENTION

The present inventors made a diligent study to solve the above problems and consequently have completed the present invention by finding out that each of the two compounds represented by the following formula (1) and (2) are poor in storage stability as described above in aqueous solution at high concentration when stored separately, unexpectedly however, the yellow dye consisting of the mixture of the two is excellent in long-term storage stability in aqueous solution at high concentration, has hue and vividness suitable for ink-jet recording, and keeps the recorded material with high fastness.

More particularly, the present invention relates to:
(1) A dye composition comprising the compounds represented by the following formulae (1) and (2): 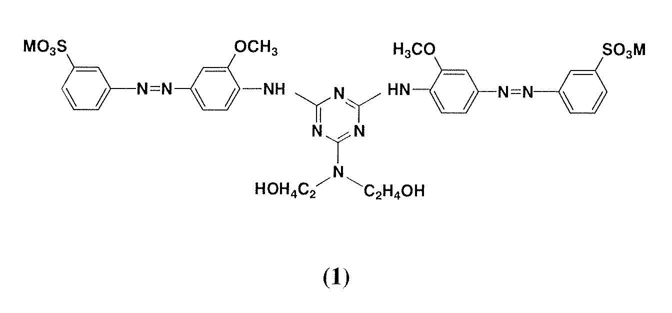 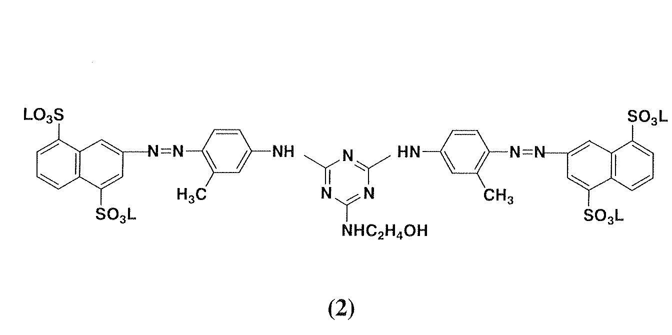 wherein, M and L respectively represents a hydrogen atom, an alkali metal, an alkali earth metal, a cation of organic amine or an ammonium ion; or the salts thereof,
(2) The dye composition comprising 90% - 20% by mass of the compound represented by the formula (1) and 10% to 80% of the compound represented by the formula (2),
(3) The dye composition according to the above (1) or (2), wherein the content of an inorganic salt included in the dye composition is 1% or less,
(4) An aqueous dye composition wherein the dye composition according to the above (1) or (2) is adjusted into 6 to 15% (by mass) aqueous solution of dyestuff components with pH ranging from 6 to 10,
(5) The aqueous dye composition wherein the dye composition according to the above (3) is adjusted into 6 to 15% (by mass) aqueous solution of dye stuff components with pH ranging from 6 to 10,
(6) A water-based ink composition characterized by comprising the dye composition according to any one of the above (1) to (3) as dyestuff components,
(7) The water-based ink composition according to the above
(6) which comprises water and an organic solvent,
(8) The water-based ink composition comprising the dye composition according to any one of the above (1) to (3) with 0.1 to 20 % by mass of dyestuff components; 5 to 60% by mass of a water soluble organic solvent; 0 to 10% by mass of an ink preparation agent and water for the rest of total content,
(9) The water-based ink composition for ink jet recording according to the above (6) to (8),
(10) A method for ink-jet recording characterized by using the water-based ink composition according to any one of the above (6) to (8) as an ink, wherein ink droplets are ejected responding to the record signals to record onto a recording material,
(11) The method for ink-jet recording according to the above (10), wherein the recording material is an information transmission sheet,
(12) An ink-jet printer equipped with a container comprising the water-based ink composition according to any one of the above (6) to (8).

### BEST MODE FOR CARRYING OUT THE INVENTION

The dyestuff mixture of the present invention can be obtained by mixing the compounds represented by the above formulae (1) and (2). There is no limitation in the mixture ratio of the compounds of the formulae (1) and (2) as far as it achieves the object of the present invention. However, the mass ratio generally ranges from 99:1 to 1:99, preferably from 90:10 to 20:80, more preferably from 80:20 to 40:60.

Further, the compound represented by the formula (1) used in the present invention can be produced by the method disclosed in Japanese patent publication No.11708/1980. And the compound represented by the formula (2) is known as C.I.Direct Yellow 86. "Ratio", "Part" and "%" in the description are shown by mass unless otherwise specified.

In the above formulae (1) and (2), M and L respectively represents a hydrogen atom, an alkali metal, an alkali earth metal, a cation of organic amine or an ammonium ion. Examples of an alkali metal include such as sodium, potassium and lithium. Examples of an alkali earth metal include such as calcium and magnesium. Examples of an organic amine include such as mono-, di- or trialkylamine ormono- , di- or trialkanolamine. "Alkyl" in the said alkylamine or alkanolamine preferably has about 1 to 10 carbon atoms, more preferably about 1 to 6. Particularly it includes such as methylamine, ethylamine, monoethanolamine, diethanolamine, triethanolamine, monoisopropanolamine, diisopropanolamine and triisopropanolamine. M and L preferably include a hydrogen atom; alkali metals such as, sodium, potassium and lithium; ammonium ion; alkanolamine ions such as, monoethanolamine ion, diethanolamine ion, triethanolamine ion, monoisopropanolamine ion, diisopropanolamine and triisopropanolamine.

And the salts thereof, sodium salt for example, can be obtained by adding sodium chloride to the reaction solution followed by salting out and filtrating. Sodium salt is dissolved in water and then added acid thereto to deposit crystal under acidic condition. Thereafter, by filtration, a wet cake of dye can be obtained in free acid form. The dye in free acid form is dissolved or dispersed in water, then added the corresponding bases such as amines, alkali metal compounds other than sodium (Na), and dissolved to obtain solutions of respective salts. Salts other than sodium salt can be obtained according to the conventional method by deposition and filtration of the respective salts from those solutions and drying.

The dye composition of the present invention is not particularly limited to any form as long as it contains the compounds represented by the above formulae (1) and (2), however, typically is used as an aqueous dye composition obtained by dissolving both compounds in water. The water-based ink composition is obtained by dissolving the compounds represented by the formulae (1) or (2) in water or in an aqueous solvent (water containing a water-soluble organic solvent described below), if necessary, together with ink preparation agents, etc.. When using the above water-based ink composition as an ink for ink jet printer, it is preferable to use compounds represented by the formulae (1) and (2) which include in an amount as little as possible of inorganic materials such as chloride, sulfate of metal positive ion, for example, 1% by mass or less in the mixture. More particularly, the rough standard of desirable content of the inorganic salt as a total content of sodium chloride and sodium sulfate, for example, is 1% by mass or less, more preferably 0.5% or less.

The content of inorganic salts can be determined by the following methods according to the respective ions: Cl⁻ and SO₄^{2 -} by ion chromatography; a heavy metal ion by atomic absorption spectrometry or ICP (Inductively Coupled Plasma) emission spectrometry; Ca²⁺ and Mg²⁺ by ion chromatography, atomic absorption spectrometry or ICP emission spectrometry.

The aqueous dye composition of the present invention is an aqueous solution of 6 to 15%, preferably 8 to 15%, more preferably 9 to 12% prepared from the dyestuff components of the present invention, with pH ranging from 6 to 11, preferably more than 7, more preferably more than 8, further preferably more than 8.5 but less than 10, without forming precipitates at 0 - 15°C during the long-term storage (more than one month). Accordingly, it is suitable for the material of high concentration dye for ink-jet recording.

The dye having less content of inorganic salt for an ink composition of the present invention can be obtained by the desalting treatments, if necessary, by a conventional reverse osmosis membrane method or a method where a dry product or a wet cake, preferably a wet cake, of the dyestuff component of the present invention (the compound or the dyes mixture of the present invention) is stirred in a solvent such as aqueous lower alcohol, preferably in a mixed solvent of methanol and water, then filtered and dried.

The water-based ink composition of the present invention is the one obtained by dissolving the above dyestuff component in water or an aqueous solvent. The preferable ink pH is about 6 to 11. For use the said water-based ink composition in an ink-jet recording printer, it is preferable to use a dyestuff component containing less amount of inorganic salt such as the chloride and the sulfate of a metal positive ion.

The water-based ink composition of the present invention is prepared by using water as a medium, containing therein the dyestuff component by 0.1 to 20%, more preferably by 0.5 to 10% , more preferably 1 to 8%. The water-based ink composition of the present invention may also contain a water-soluble organic solvent by about 60% or less, preferably by about 50% or less, more preferably by about 40% or less, further preferably by about 30% or less and by 0% or more, generally by about 5% or more, preferably by about 10% or more and most preferably by 10-30%. The water-based ink composition of the present invention may also contain ink regulators by about 0 to 10%, preferably by 5% or less. The remainder other than said components is water.

The water-soluble organic solvent includes a C₁ - C₄ alkanol such as methanol, ethanol, propanol, isopropanol, butanol, isobutanol, secondary butanol and tertiary butanol; a lower carboxylic (mono or di)lower alkylamide such as N,N-dimethylformamide and N,N-dimethylacetoamide; a lactam such as N-methylpyrrolidin-2-one, preferably a 4-8 membered ring of lactam; a cyclic urea such as 1,3-dimetylimidazolidin-2-one and 1,3-dimethyl hexahydropyrimid-2-one, preferably a 5-6 membered ring of cyclic urea; a ketone or keto-alcohol of C₄-C₇ straight chain such as acetone, methyl ethyl ketone and 2-methyl-2-hydroxypentan-4-one; an ether such as tetrahydrofuran and dioxane, preferably a cyclic ether of 5-6 membered ring; a mono-, oligo- or poly-alkylene glycol, or thioglycol having C₂ - C₆ alkylene units such as ethylene glycol, 1,2- or 1,3-propylene glycol, 1,2- or 1,4-butylene glycol, 1,6-hexylene glycol, diethylene glycol, triethylene glycol, dipropylene glycol, thiodiglycol, polyethylene glycol and polypropylene glycol; a polyol (preferably a C₃ - C₆ chain of triol) such as glycerin and hexane-1,2,6-triol; a C₁ - C₄ alkyl ether of polyhydric alcohol(preferably ethylene glycol or polyethylene glycol) such as ethylene glycol monomethyl ether, ethylene glycol monoethyl ether, diethylene glycol monomethyl ether, diethylene glycol monoethyl ether, triethylene glycol monomethyl ether, and triethylene glycol monoethyl ether; γ-butyrolactone; or dimethylsulfoxide. Some of these water-soluble organic solvents act as dye dissolving agents.

Those solvents may be used in combination of two or more. The preferable examples are N-methylpyrrolidin-2-one, mono- or poly- C₁-C₄ alcohol, mono-, di- or tri-alkylene glycol having C₂-C₆ alkylene units (preferably, mono-, di- or triethylene glycol, dipropylene glycol) and dimethylsulfoxide. N-methylpyrrolidin-2-one, isopropanol, diethylene glycol, glycerin and dimethylsulfoxide are particularly preferable.

The ink preparation agents include all the components other than the above described water, the dyestuff component and the water-soluble organic solvent, examples of which are preservatives, pH-adjusting agents, chelating agents, rust preventives, water-soluble ultraviolet absorbing agents, dye-dissolving agents, water-soluble polymer compounds and surfactants. The preservatives include sodium dehydroacetate, sodium sorbate, sodium-2-pyridinethiol-1-oxide, sodium benzoate and sodium pentachlorophenol. The pH-adjusting agents include any substances that can control ink pH within a range of 6 to 11 as far as it has no adverse effect on ink preparation. The examples of which are alkanolamines such as diethanolamine and triethanolamine; alkali metal hydroxides such as lithium hydroxide, sodium hydroxide, and potassium hydroxide; ammonium hydroxide; or alkali metal carbonates such as lithium carbonate, sodium carbonate and potassium carbonate. The chelating reagents include sodium ethylenediamine tetraacetate, sodium nitrilotriacetate, sodium diethylenetriamine pentaacetate, and sodium uracil diacetate. The rust preventives include acidic hyposulfite salts, sodium thiosulfate, ammonium thioglycolate, diisopropylammoniumnitrite, pentaerythritol tetranitrate, and dicyclohexylammonium nitrite. The chelating reagents include sodium ethylenediamine tetraacetate, sodium nitrilotriacetate, and sodium uracil diacetate. The water-soluble ultraviolet absorbing agents include sulfonated benzophenone and sulfonated benzotriazole, and the water-soluble polymeric compounds include polyvinyl alcohol, polyamine and polyimine. The dye-dissolving agents include such as ε -caprolactam, urea and ethylene carbonate. The surfactants include, for example, the conventional anionic, cationic and nonionic surfactants.

The ink composition of the present invention is prepared by adding the dyestuff of the present invention, if necessary, with the above described water-soluble organic solvents and the ink regulators into impurity-free water such as distilled water and then mixing together. Alternatively, the dyestuff of the present invention may be added in a mixture of water, the above water-soluble organic solvent and the ink regulators to dissolve. The resulting ink composition may be filtered, if necessary, to remove the contaminants from the composition.

A recording material to use for ink-jet recording of the present invention includes, for example, an information transmission sheet such as paper and film. The information transmission sheet is preferably surface-treated and, practically, is coated with an ink-acceptable layer on the base material. The ink-acceptable layer can be provided, for example, by impregnating or coating a cationic polymer on the above described base material, or by coating an inorganic fine particle such as porous silica, alumina sol and special ceramics which can absorb the dyestuff of an ink together with a hydrophilic polymer such as polyvinyl alcohol and polyvinyl pyrrolidone on the above described base material. The provided sheet having the ink-acceptable layer is generally called an ink-jet special paper (film) or a glossy paper (film), and is available on the market, for example, as Pictorico (by Asahi Glass KK), Color BJ Paper, Color BJ Photofilm sheet, Professional Photo Paper (respectively by Canon KK), Color Image Jet special paper(by Sharp KK), Superfine special glossy film, PM Photo paper (by Seiko Epson KK)and Pictafine(by Hitachi Maxell KK). The Plain paper can of course be used.

In order to record on a recording material by the ink-jet recording method of the present invention, a container holding the above water-based ink composition (yellow) is to be set on an ink-jet printer to record on the above described recording material by a conventional manner. The ink-jetprinter includes a piezo system printer using a mechanical vibration and a bubble-jet™ system printer using bubble generated by heating.

In the ink-jet recording method of the present invention, the above water-based ink composition (yellow) can be used in combination with a magenta ink composition, a cyan ink composition or, if necessary, a black ink composition.

The water-based ink composition of the present invention can give a vivid and high chroma yellow color. Therefore, the composition, if used together with a magenta or cyan ink, can give a wide range of color tone in the visible region. Further, the composition, if used together with the available magenta, cyan or black inks excellent in light fastness and water fastness , can provide a recorded product excellent in light fastness and water fastness.

### EXAMPLE

The present invention will be described below in more details with reference to Examples. "part" and "%" within the description are indicated by mass unless otherwise specified.

### Example 1

The dyes represented by the above formula (1) (M=Na) and formula (2) (L=Na) for use in Examples were desalted respectively whereby were reduced in content of the inorganic substances using reverse osmosis membrane (by TEIJIN LTD.), and consecutively dried with oven. The contents of inorganic salts included in the dyes of formulae (1) and (2) are shown below.

The content of inorganic salts in the dye of formula (1): 0.1% or less (NaCl :813ppm, Na₂SO₄:173ppm)
The content of inorganic salts in the dye of formula (2): 0.5% or less (NaCl :3600ppm, Na₂SO₄:1270ppm)

### Example 2

The dyes of formulae (1) and (2), after the desalting treatment in Example 1, were blended respectively according to the following ratios: ① 8: 2; ② 7: 3; ③ 6: 4 and ④ 5: 5, and adjusted to pH 9 by adding sodium hydroxide and thereby obtained the 10% aqueous solutions of the dyes.

Additionally for Comparative Examples, the 10% aqueous solutions of the dye with pH 9 were prepared by the compounds of formula (1) (Comparative Example 1) and formula (2) (Comparative Example 2) respectively.

The methods for preparing the 10% aqueous solutions respectively for the above ①, ②, ③ and ④ were shown below.

The 10 % aqueous solution of the compound of formula (1) was prepared as follows: Firstly, the contents of water and the inorganic substance included in the compound of formula (1) obtained in Example 1 were measured, then deducted from mass of said compound, and prepared into the 10% aqueous solution.

The absorbance of 10% aqueous solution was determined in advance according to the two-step dilution such that one gram of said 10% solution was weighed and diluted in 500mL flask, wherefrom the solution was taken out with 10mL pipette to be diluted into 100mL flask and then the absorbance thereof was determined. The solution adjusted in the concentration thereof using a high concentration solution obtained by desalting with reverse osmosis membrane was diluted by the same dilution method as above so as to have the same absorbance as determined in advance, which was defined as 10% aqueous solution.

Absorbance was measured using D65 illuminant, with 2° of viewing angle and 10mm transmission light length.

The same procedure has been applied with respect to the compound of the formula (2).

The aqueous dye composition of the present invention was prepared by blending each 10% aqueous solution of the compound of the formula (1) and (2) obtained by the same method as above according to the ratios: ① 8: 2; ② 7:3; ③ 6: 4 and ④ 5:5 and adjusting pH to 9.

For Comparative Examples, 10% aqueous solutions of the formula (1) or (2) prepared as above were used separately by adjusting pH to 9 respectively.

### Example 3

The liquid dye composition prepared in the Example 2 were left at 0°C and 15°C respectively, the presence or absence of the formed precipitate has been observed. The result after one month was shown in Table 1.

**Table 1**

| | Formula(1):formula(2) | left at 0°C | left at 15°C |
|---|---|---|---|
| ① | 8 : 2 | Not precipitate after one month | Not precipitate after one month |
| ② | 7 : 3 | Not precipitate after one month | Not precipitate after one month |
| ③ | 6 : 4 | Not precipitate after one month | Not precipitate after one month |
| ④ | 5 : 5 | Not precipitate after one month | Not precipitate after one month |
| Comparative Example 1 | 10 : 0 | Precipitate after 20 days | Not precipitate after one month |
| Comparative Example 2 | 0 : 10 | Precipitate after 3 days | Precipitate after 7 days |

The observation has been carried out for another year and found no precipitate formed in any of ① to ④.

The result of Table 1 revealed that the dye compositions prepared by blending the compounds of formula (1) and (2) were excellently stable in long-term storage without forming precipitates or generating exogenous materials at 0-15°C.

### Example 4

### (A) Preparation of an ink

Each water-based ink composition for ink-jetting was obtained by preparing the liquid consisting of the composition shown in Table 2 below, followed by filtrating through 0.45 µm membrane filter. Ion exchanged water was used for the reaction water. Water and sodium hydroxide were added to adjust pH of the ink composition to 8-9 and total quantity to be 100 parts.

**Table 2**

| | |
|---|---|
| Dyes(dyestuff components)obtained in the above Example 2 (converted into solid) | 2.0 parts |
| Ion exchanged water + sodium hydroxide | 79.0 parts |
| Glycerin | 5.0 parts |
| Urea | 5.0 parts |
| N-methyl-2-pyrrolidone | 4.0 parts |
| IPA (isopropanol) | 3.0 parts |
| Butylcarbitol | 2.0 parts |
| Total | 100.0 parts |

### (B) Ink-jet printing

By using an inkjet-printer (Trade name: PICTY80L, by NEC KK), ink-jet recordings were performed on to three types of recording material: plain paper (Printer Paper A4 TLB5A4S, by Canon), glossy paper A (Professional Photo Paper PR-101, by Canon KK), glossy paper B (PM Photo Paper KA420PSK, by Seiko-Epson KK). The test results in hue, vividness, light fastness and water fastness of the recorded images of the water-based yellow ink composition of the present invention are listed in Table 3.

For comparison purpose, the ink compositions of the dyes represented by the above formulae (1) (Comparative Example 1), (2)(Comparative Example 2), and C.I.Direct Yellow 132, which is practically used as yellow dyestuff (Comparative Example 3) for ink jet recording, are prepared the same as above. The test results with respect to the hue, vividness, light fastness and water fastness of the recorded images of the prepared ink compositions are listed in Table 3.

The hue and vividness of a color sample of standard yellow in Japan Color by JNC (Japan Printing Machinery Manufacturers Association) are shown in Table 3 in comparison to those of the yellow ink of the present invention.

### (C) Evaluation of Recorded Image

### 1. Hue Evaluation

Hue and Vividness of Recorded Image: A recorded paper was subjected to color determination using GRETAG SPM50 (by GRETAG Co.) to calculate L*, a*, b* values. Hue was evaluated in comparison with a color sample of standard yellow in Japan Color by JNC (Japan Printing Machinery Manufacturers Association) and vividness was evaluated from a value calculated from the equation: C*=((a*)²+(b*)²)^{1/2}

### 2. Light Fastness Test

Carbon Arc Fade Meter (by Suga Test Instruments Co., Ltd.) was used to irradiate on the recorded images for 40 hours. Grade was evaluated according to the blue scale defined in JIS L-0841 and a color difference (ΔE) between before and after the test was determined by the above color determination system.

### 3. Water Fastness Test

A recorded paper was immersed in a beaker of water, pulled out and air-dried after stirring for 2 minutes. Change between before and after the immersion treatment was evaluated according to JIS brown gray scale, and color difference between before and after the immersion treatment was determined by the above color determination system.

### 4. Moisture Fastness Test

The test samples of Glossy Paper A and B were placed in a constant temperature and humidity chamber (by OHKEN Co., LTD) at 60°C, 90%RH for 20 hours.

Bleeding between before and after the test was judged by visual evaluation:
○: a little visible bleeding
Δ: a comparatively large visible breeding
×: a large visible bleeding

**Table 3**

| Evaluation | Hue | | | Vividness | Light-fastness | Water-fastness | Moisture-fastness |
|---|---|---|---|---|---|---|---|
| | L* | a* | b* | (C*) | Evaluation (ΔE) | Evaluation (ΔE) | |
| ① (Formula (1) : Formula (2) = 8 : 2) | | | | | | | |
| Plain Paper | 87.5 | 3.5 | 70.3 | 70.4 | Grade 2 (23.2) | Grade 3 (14.2) | - |
| Glossy Paper A | 90.7 | -2.4 | 90.1 | 90.1 | Grade3-4 (13.5) | Grade 5 (1.4) | ○ |
| Glossy Paper B | 89.5 | -3.3 | 92.1 | 92.2 | Grade 3 (19.9) | Grade 5 (2.7) | ○ |

| ② (Formula (1) : Formula (2) = 7 : 3) | | | | | | | |
|---|---|---|---|---|---|---|---|
| Plain Paper | 85.9 | 4.3 | 70.6 | 70.7 | Grade 3 (20.4) | Grade 4 (7.0) | - |
| Glossy Paper A | 90.4 | -0.9 | 90.5 | 90.5 | Grade 4 (9.6) | Grade 5 (0.7) | ○ |
| Glossy Paper B | 89.0 | -1.8 | 94.3 | 94.3 | Grade3-4 (15.1) | Grade 5 (1.7) | ○ |

| ③ (Formula (1) : Formula (2) = 6 : 4) | | | | | | | |
|---|---|---|---|---|---|---|---|
| Plain Paper | 86.0 | 5.3 | 71.0 | 71.2 | Grade 3 (19.8) | Grade 4 (9.3) | - |
| Glossy Paper A | 89.8 | 0.1 | 88.8 | 88.8 | Grade 5 (5.6) | Grade 5 (1.0) | ○ |
| Glossy Paper B | 88.9 | -1.6 | 91.3 | 91.3 | Grade 4 (11.7) | Grade 5 (2.7) | ○ |

| ④ (Formula (1) : Formula (2) = 5 : 5) | | | | | | | |
|---|---|---|---|---|---|---|---|
| Plain Paper | 85.2 | 8.5 | 76.5 | 77.0 | Grade 3 (18.8) | Grade 3 (11.8) | - |
| Glossy Paper A | 89.2 | 2.5 | 97.8 | 97.8 | Grade 5 (5.5) | Grade 5 (1.9) | ○ |
| Glossy Paper B | 88.3 | 0.5 | 97.4 | 97.4 | Grade 4 (11.5) | Grade 5 (2.1) | ○ |

| Comparative Example 1 (Formula (1) solely) | | | | | | | |
|---|---|---|---|---|---|---|---|
| Plain Paper | 88.1 | 2.4 | 70.5 | 70.5 | Grade 2 (27.7) | Grade 3 (10.8) | - |
| Glossy Paper A | 91.1 | -2.9 | 94.3 | 94.3 | Grade3-4 (13.8) | Grade 5 (0.9) | ○ |
| Glossy Paper B | 89.9 | -4.1 | 97.2 | 97.2 | Grade 2 (27.7) | Grade 5 (2.2) | Δ |

| Comparative Example 2 (Formula (2) only) | | | | | | | |
|---|---|---|---|---|---|---|---|
| Plain Paper | 84.6 | 13.2 | 75.1 | 76.3 | Grade3-4 (12.5) | Grade 4 (8.9) | - |
| Glossy Paper A | 87.7 | 7.2 | 99.8 | 100.0 | Grade 5 (4.6) | Grade 5 (1.5) | ○ |
| Glossy Paper B | 86.8 | 5.1 | 100.0 | 100.1 | Grade 5 (3.3) | Grade 5 (2.2) | ○ |

| Comparative Example 3 (C.I. Direct Yellow 132) | | | | | | | |
|---|---|---|---|---|---|---|---|
| Plain Paper | 88.2 | 2.4 | 58.7 | 58.7 | Grade 1 (42.6) | Grade 1 (42.9) | - |
| Glossy Paper A | 91.6 | -4.4 | 82.6 | 82.7 | Grade 1 (28.5) | Grade 4 (5.4) | Δ |
| Glossy Paper B | 90.5 | -5.8 | 84.3 | 84.5 | Grade 1 (34.0) | Grade 5 (4.8) | × |
| JNC Standard Yellow | 86.5 | -6.6 | 91.1 | 91.3 | - | - | |

According to Table 3, the ink composition of Comparative Example 2 prepared using the compound of formula (2) is good in light fastness and water fastness, however exhibits reddish hue which is far apart from the hue of JNC standard yellow. However, the ink composition of the present invention prepared by blending the compound of formula (1), apparently exhibiting the hue proximate to that of JNC standard yellow, is found to be suitable for a yellow ink for ink-jet recording.

According to Table 3, the ink using the dye composition of the present invention exhibits excellent water fastness on plain paper or glossy paper, particularly on glossy paper. The improvement also in light fastness has been observed in the ink composition of the present invention prepared by blending the compound of formula (2) into the compound of formula (1) compared with the ink of Comparative Example 1 prepared only by the compound of formula (1). Further, the ink of the present invention is excellent in water fastness, moisture fastness and light fastness compared with the yellow ink of Comparative Example 3 which has been generally used as the yellow ink for ink-jet recording.

In view of the above, it is possible to prepare extremely excellent yellow ink for ink-jet recording which has a wide range of usability by using the dye composition of the present invention.

### INDUSTRIAL APPLICABILITY

The dye composition of the present invention is excellent in water-solubility, moreover, even the dye prepared into comparatively high concentration does not either form precipitate or generate exogenous materials after a long-term storage under such a severe condition at 0-15 °C . It is characterized by showing an excellent permeability when filtrated through a membrane filter during the preparation process of an ink composition, which enables to produce an ink of high concentration as a dyestuff for ink-jet recording. It also shows a high-standard color value. Further, the ink composition of the present invention prepared by using said dye composition has good storage stability without a crystal deposition, any changes in its property or color after a long-term storage. The ink composition of the present invention, when used as a yellow ink for ink-jet recording, can provide a printed matter with excellent grade in light fastness, moisture fastness and water fastness. It can give an ink-jet recording that is excellent in light fastness, moisture fastness and water fastness when used together with a magenta, cyan or black dye. It also provide a vivid printed surface close to an ideal yellow color, and further can provide a wide range of color tone in visible region when used together with other inks such as a magenta and cyan. Accordingly, the ink composition of the present invention is particularly useful as a yellow ink composition for ink-jet recording.

## Claims

1. A dye composition comprising the compounds represented by the following formulae (1) and (2): 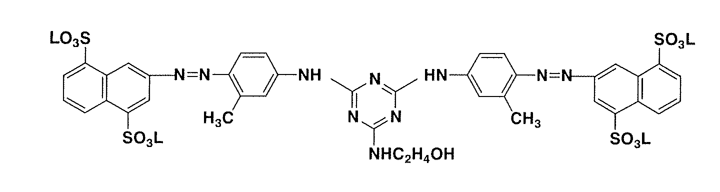 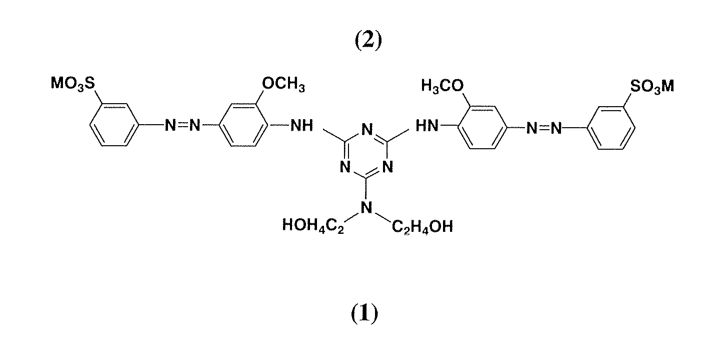 wherein, M and L respectively represents a hydrogen atom, an alkali metal, an alkali earth metal, a cation of an organic amine or an ammonium ion.

2. The dye composition comprising 90% - 20% by mass of the compound represented by the formula (1) and 10% to 80% of the compound represented by the formula (2).

3. The dye composition according to Claim 1 or 2, wherein the content of an inorganic salt included in the dye composition is 1% or less.

4. An aqueous dye composition wherein the dye composition according to Claim 1 or 2 is adjusted into 6 to 15% (by mass) aqueous solution of dyestuff components with pH ranging from 6 to 10.

5. The aqueous dye composition wherein the dye composition according to Claim 3 is adjusted into 6 to 15% (by mass) aqueous solution of dye stuff components with pH ranging from 6 to 10.

6. A water-based ink composition **characterized by** comprising the dye composition according to Claims1 or 2 as dye stuff components.

7. The water-based ink composition according to Claim 6, comprising water and an organic solvent.

8. The water-based ink composition comprising the dye composition according to Claims 3 with 0.1 to 20 % by mass of dyestuff components; 5 to 60% by mass of a water soluble organic solvent; 0 to 10% by mass of an ink preparation agent and water for the rest of total content.

9. The water-based ink composition according to Claim 6 for ink jet recording.

10. A method for ink-jet recording **characterized by** using the water-based ink composition according to Claim 6 as an ink, wherein ink droplets are ejected responding to the record signals to record onto a recording material.

11. The method for ink- jet recording according to Claim 10, wherein the recording material is an information transmission sheet.

12. An ink- jet printer equipped with a container comprising the water-based ink composition according to Claim 9.
